# EUROPEAN PATENT SPECIFICATION

(11) **EP 4 336 521 B1**
(45) Date of publication and mention of the grant of the patent: **01.07.2026**
(21) Application number: 22861730.4
(22) Date of filing: 25.08.2022
(51) Int. Cl.: H01B 7/02, H01M 50/298, H01B 7/04, H01M 10/42, H01B 7/08

(54) **CONNECTION WIRE AND BATTERY PACK INCLUDING SAME**
VERBINDUNGSDRAHT UND BATTERIEPACK DAMIT
FIL DE CONNEXION ET BLOC-BATTERIE LE COMPRENANT

(30) Priority: 25.08.2021 KR 20210112603
(43) Date of publication of application: 13.03.2024
(73) Proprietor: LG Energy Solution, Ltd., Seoul 07335 (KR)
(72) Inventor: YUN, Sunwoo, Daejeon 34122 (KR)
(74) Representative: Goddar, Heinz J.
(86) International application number: PCT/KR2022/012719
(87) International publication number: WO 2023/027522

(56) References cited:
- GB-A- 824 615
- JP-A- 2002 280 790
- JP-A- H0 997 520
- JP-A- H05 274 924
- JP-A- H08 203 336
- KR-A- 20210 017 172
- US-A1- 2007 151 748
- US-A1- 2011 088 945
- US-A1- 2014 054 085

## Description

### [TECHNICAL FIELD]

### Cross Citation with Related Application(s)

This application claims the benefit of Korean Patent Application No. 10-2021-0112603 filed on August 25, 2021 with the Korean Intellectual Property Office.

The present disclosure relates to a connection wire and a battery pack including the same, and more particularly, to a connection wire for connecting a HV (high voltage) and a battery pack including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because it has advantages, for example, hardly exhibiting memory effects compared to nickel-based secondary batteries and thus being freely charged and discharged, and having very low self-discharge rate and high energy density.

Such a lithium secondary battery mainly uses a lithium-based oxide and a carbonaceous material as a positive electrode active material and a negative electrode active material, respectively. The lithium secondary battery comprises an electrode assembly in which a positive electrode plate and a negative electrode plate, each being coated with the positive electrode active material and the negative electrode active material, are arranged with a separator being interposed between them, and a battery case which seals and houses the electrode assembly together with an electrolyte solution.

Generally, the lithium secondary battery may be classified into a can-type secondary battery in which the electrode assembly is mounted in a metal can, and a pouch-type secondary battery in which the electrode assembly is mounted in a pouch of an aluminum laminate sheet, depending on the shape of the exterior material.

In the case of a secondary battery used for small-sized devices, two to three battery cells are arranged, but in the case of a secondary battery used for a medium- and large-sized device such as automobiles, a battery module in which a large number of battery cells are electrically connected is used. In such a battery module, a large number of battery cells are connected to each other in series or parallel to form a cell assembly, thereby improving capacity and output. Further, one or more battery modules can be mounted together with various control and protection systems such as a BDU(Battery Disconnect Unit), a BMS (battery management system) and a cooling system to form a battery pack.

Since a high current is used in the device to which the battery pack is mounted, the cross-sectional areas of an HV wire and HV busbar, which take charge of HV (high voltage) connections in battery packs, are increasing. Even if flexible HV wires or flexible busbars are applied for connecting the HV according to the increase in cross-sectional area, there is a problem that it is not easy to realize bent portions, and it is difficult to arrange the flexible HV wire or the flexible busbar in the available space inside the battery pack. Here, the HV connection is a connection serving as a power source for supplying power, and means a connection between battery cells or between battery modules.

Therefore, there is a need to develop an HV connection structure that can be freely deformed so as to be applicable to a limited space inside a battery pack.

GB 824615 A describes a connection wire in accordance with the preamble of independent claim 1. US2011088945, US2007151748 and US2014054085 also disclose wound connection wires.

### [DETAILED DESCRIPTION OF THE INVENTION]

### [Technical Problem]

It is an object of the present disclosure to provide a connection wire with increased flexibility so to be applicable to a limited space inside the battery pack, and a battery pack including the same.

However, the problem to be solved by embodiments of the present disclosure is not limited to the above-described problems, and can be variously expanded within the scope of the technical idea included in the present disclosure, according to the appended claims.

### [Technical Solution]

According to one embodiment of the present disclosure, there is provided a connection wire comprising: a plurality of conductive members; and an insulating member surrounding the conductive members, wherein the insulating member has a wound shape, the conductive members being located on an inner surface of the insulating member.

The conductive member may include a terminal part that is exposed by extending longer in one direction than the insulating member.

The insulating member has a wound shape in a state in which the conductive members are sequentially arranged in the direction from a center side one end of the insulating member to an outside one end of the insulating member.

A distance between the conductive member closest to the outside one end of the insulating member and the outside one end of the insulating member may be wider than a distance between the conductive member closest to the center side one end of the insulating member and the center side one end of the insulating member.

In the outermost region, the insulating member may be wound at least once or more to form an outer insulating part.

The conductive member is a flexible flat cable.

The conductive member includes a conductor part and an insulating film surrounding the conductor part.

Each of the conductive members is arranged so as to contact only the wound insulating member and not to contact other conductive members. A pore is formed between the conductive members.

The conductive member may be an electric conductor.

The connection wire may further include a shielding circuit part. The shielding circuit part may be located on the inner surface of the wound insulating member, and based on the winding shape of the insulating member, the shielding circuit part may be located farther from the winding center than the conductive members.

The insulating member may have a wound shape, in a state in which the shielding circuit part is spaced apart from the conductive member in the direction from a center side one end of the insulating member to an outside one end of the insulating member.

The shielding circuit part may include a metal layer.

The connection wire further includes a short circuit prevention sheet. The short circuit prevention sheet is located on the inner surface of the wound insulating member, and on the basis of the wound shape of the insulating member, the short circuit prevention sheet is located farther from the winding center than the conductive members.

The short circuit prevention sheet includes a ceramic sheet.

The short circuit prevention sheet may include a MICA sheet.

According to another embodiment of the present disclosure, there is provided a battery pack comprising: the connection wire; battery modules; and a BDU module, wherein the connection wire electrically connects between the battery modules or between the battery module and the BDU module.

### [Advantageous Effects]

According to embodiments of the present disclosure, a connection wire is provided in the form of winding a plurality of conductive members around an insulating member, thereby being able to increasing the flexibility of the connection wire.

Specifically, since an insulating member has a wound shape, it can be bent after locally compressing the pore inside the insulating member. Since the pore inside the insulating member can be compressed and bent as described above, a bent portion can be formed in the connection wire with a more reduced radius of curvature.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a plan view showing a battery pack according to one embodiment of the present disclosure;
Fig. 2 is a perspective view showing a battery module included in the battery pack of Fig. 1;
Fig. 3 is a partial perspective view showing a state in which the module frame and the end plate are removed from the battery module of Fig. 2;
Fig. 4 is a schematic diagram for explaining a process of manufacturing a connection wire according to one embodiment of the present disclosure;
Fig. 5 is a perspective view showing a connection wire according to one embodiment of the present disclosure;
Fig. 6 is a plan view of the connection wire of Fig. 5 as viewed along a direction A;
Fig. 7 is a partial perspective view showing a conductive member according to one embodiment of the present disclosure;
Fig. 8 is a partial perspective view showing a conductive member according to another embodiment of the present disclosure;
Fig. 9 is a partial perspective view showing a flexible busbar according to a comparative example of the present disclosure;
Fig. 10 is a schematic diagram for explaining a process of forming a bent portion in a connection wire according to one embodiment of the present disclosure;
Fig. 11 is a schematic diagram for explaining a process of manufacturing a connection wire according to another embodiment of the present disclosure;
Fig. 12 is a perspective view showing a connection wire according to another embodiment of the present disclosure;
Fig. 13 is a plan view of the connection wire of Fig. 12 as viewed along a direction B;
Fig 14 is a schematic diagram for explaining a process of manufacturing a connection wire according to another embodiment of the present disclosure;
Fig. 15 is a perspective view showing a connection wire according to another embodiment of the present disclosure; and
Fig. 16 is a plan view of the connection wire of Fig. 15 as viewed along a direction C.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

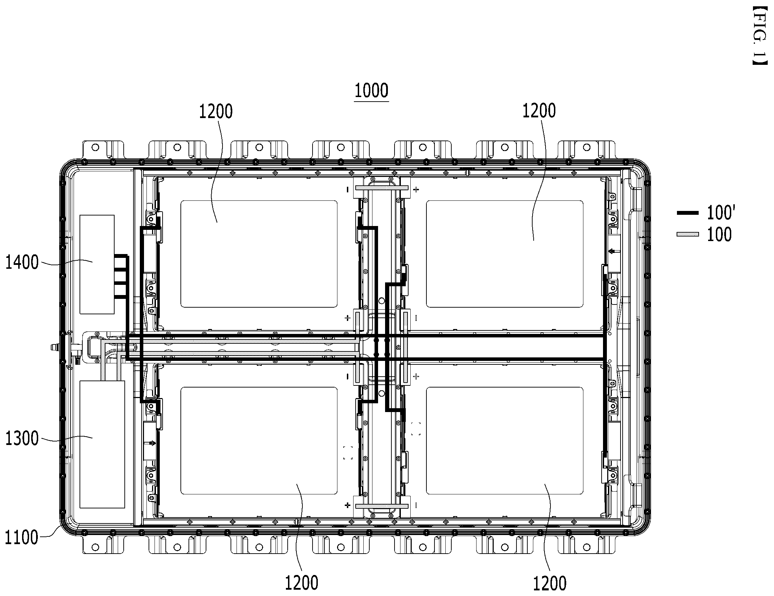

Fig. 1 is a plan view showing a battery pack according to one embodiment of the present disclosure.

Referring to Fig. 1, the battery pack 1000 according to one embodiment of the present disclosure includes a connection wire 100, battery modules 1200 and a battery disconnect unit (BDU) module 1300. The connection wire 100 according to the present embodiment electrically connects between the battery modules 1200 or between the battery module 1200 and the BDU module 1300. Specifically, a plurality of battery modules 1200 can be housed in a pack frame 1100, and electrical connection between the battery modules 1200 or between the battery module 1200 and the BDU module 1300 may be performed by the connection wire 100. That is, the connection wire 100 according to the present embodiment can take charge of HV (high voltage) connection. Here, the HV connection is a connection serving as a power source for supplying electric power, and means a connection between battery cells or between battery modules.

Meanwhile, the BDU module 1300 is a member for controlling electrical connection of the battery module 1200, and may cut off power between a power converter and the battery module 1200. The BDU module 1300 may secure the safety of the battery pack 1000 by cutting off the power of the battery pack 1000 if a condition occurs where the current exceeds the set range.

Meanwhile, the battery pack 1000 according to the present embodiment may include a BMS (battery management system) module 1400 for monitoring and controlling the operation of the battery module 1200 and a connection member 100' for connecting the battery module 1200 and the BMS module 1400. The connection member 100' ca take charge of LV (low voltage) connection. Here, the LV connection means a sensing connection for sensing and controlling the voltage and temperature of the battery module 1200. Specifically, a sensor or the like is arranged inside the battery module 1200, and real-time temperature information or voltage information of the battery module 1200 is transmitted to the BMS module 1400 via the connection member 100'. A real-time operating state of the battery module 1200 can be monitored and controlled via the BMS module 1400.

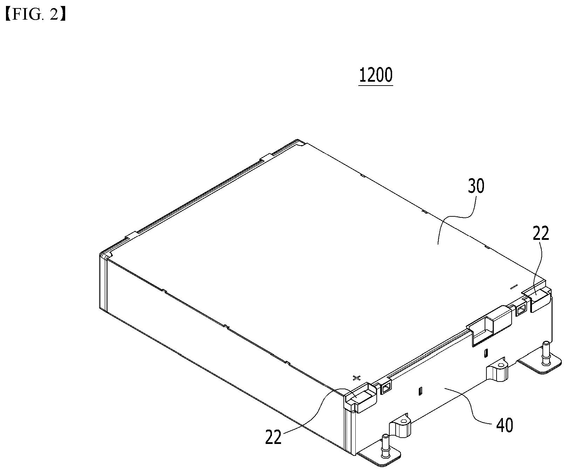

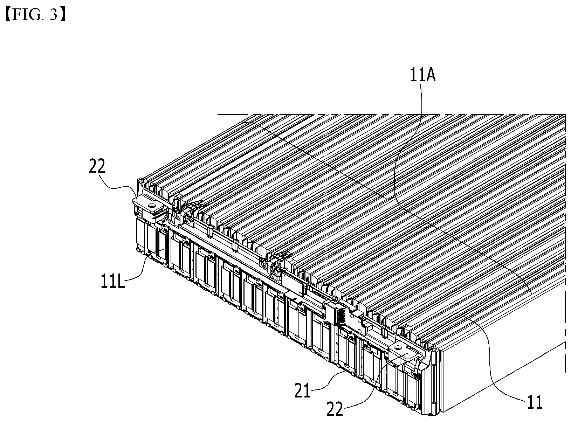

Next, the battery module 1200 according to the present embodiment will be described with reference to Figs. 2 and 3. However, the battery module 1200 described below is an exemplary structure of a battery module including a plurality of battery cells 11, and various forms of battery modules including a plurality of battery cells can be applied.

Fig. 2 is a perspective view showing a battery module included in the battery pack of Fig. 1. Fig. 3 is a partial perspective view showing a state in which the module frame and the end plate are removed from the battery module of Fig. 2.

Referring to Figs. 2 and 3, the battery module 1200 according to the present embodiment may include a battery cell stack 11A in which a plurality of battery cells 11 are stacked. The battery cell stack 11A is shown in Fig. 3. The battery cell stack 11A may be housed in the module frame 30 and the end plate 40.

The battery cell 11 may be a pouch-type battery cell. Such a pouch-type battery cell can be formed by housing an electrode assembly in a pouch case made a laminate sheet including a resin layer and a metal layer, and then fusing the outer periphery of the pouch case. These battery cells 11 can be formed into a rectangular sheet structure. The electrode lead 11L connected to the electrode assembly protrudes to the outside of the pouch case, wherein the electrode leads 11L of each battery cell 11 may be electrically connected to each other via the busbar 21. Meanwhile, at least one electrode lead 11L may be connected to the terminal busbar 22. A partial area of the terminal busbar 22 may be exposed to the outside of the battery module 1200 as shown in Fig. 2. The connection wire 100 according to the present embodiment is electrically connected to the terminal busbar 22, so that the above-mentioned HV connection can be performed. That is, the battery module 1200 may be electrically connected to the other battery module 1200 or BDU module 1300 via the connection wire 100 connected to the terminal busbar 22.

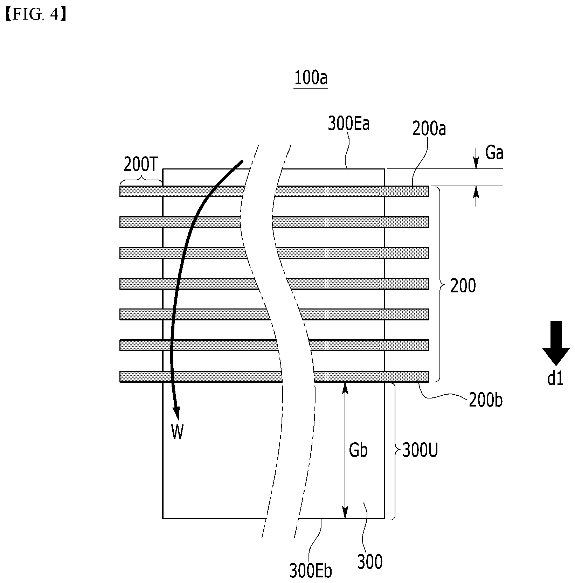

Next, a connection wire according to one embodiment of the present disclosure will be described in detail with reference to Figs. 4 to 6.

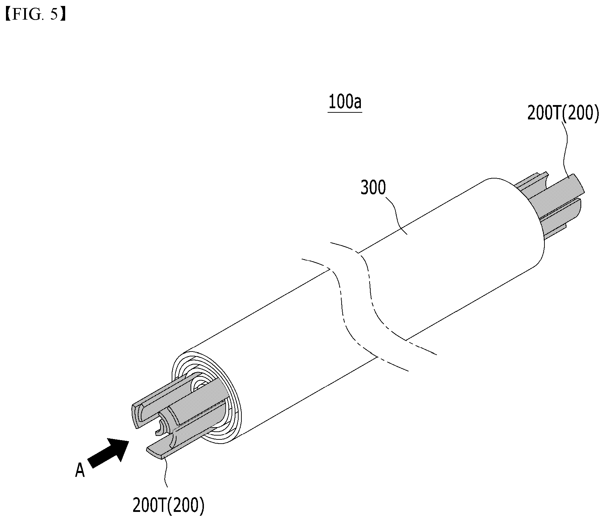

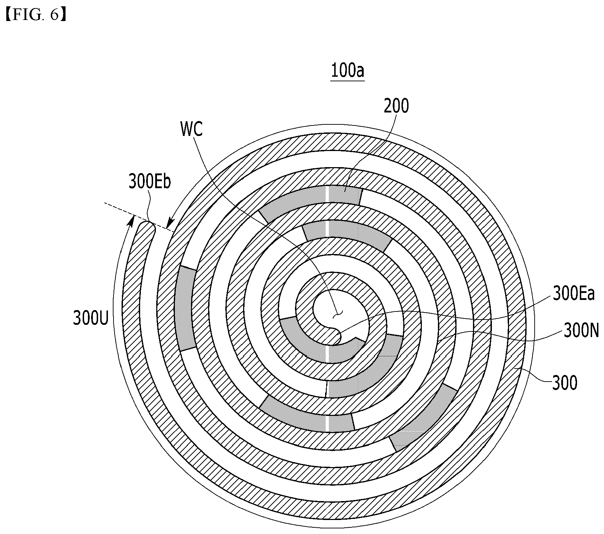

Fig. 4 is a schematic diagram for explaining a process of manufacturing a connection wire according to one embodiment of the present disclosure. Fig. 5 is a perspective view showing a connection wire according to one embodiment of the present disclosure. Fig. 6 is a plan view of the connection wire of Fig. 5 as viewed along a direction A.

Referring to Figs. 4 to 6, the connection wire 100a according to one embodiment of the present disclosure includes a plurality of conductive members 200 and an insulating member 300 surrounding the conductive members 200. At this time, the insulating member 300 has a wound shape, and the conductive members 200 are located on the inner surface 300N of the insulating member 300.

Specifically, as shown in Fig. 4, after the conductive members 200 is arranged on one surface of the insulating member 300, the insulating member 300 may be wound (W) into a round form. Thereby, the connection wire 100a shown in Figs. 5 and 6 can be manufactured. At this time, the inner surface 300N of the insulating member 300 referred to herein may correspond to the one surface of the insulating member 300 on which the conductive members 200 are placed, that is, one surface in the direction in which the insulating member 300 is wound (W).

More specifically, the connection wire 100a according to the present embodiment may have a shape so that the insulating member 300 is wound so as to wrap the conductive member 200, in a state in which the conductive members 200 are sequentially arranged in a direction d1 from the center side one end 300Ea of the insulating member 300 to the outside one end 300Eb of the insulating member 300. The center side one end 300Ea of the insulating member 300 is a portion that is first wound in the insulating member 300, which is a portion located at the winding center (WC, see Fig. 6) of the wound insulating member 300. The outside one end 300Eb of the insulating member 300 is a portion that is finally wound in the insulating member 300, which is the outermost portion of the wound insulating member 300.

Further, as shown in Figs. 4 and 5, the conductive member 200 may include a terminal part 200T that is exposed by extending longer in one direction than the insulating member 300. That is, the conductive member 200 is formed longer than the insulating member 300 with respect to an extending direction of the connection wire 100a, and both ends of the conductive member 200 are exposed to the outside of the insulating member 300, so that a terminal part 200T can be provided. The method of forming the terminal part 200T is not particularly limited. For example, the conductive member 200 can be formed longer than the insulating member 300 to naturally form the terminal part 200T. Alternatively, after the conductive members 200 is wrapped with the insulating member 300, both ends of the insulating member 300 may be partially removed to expose the terminal part 200T.

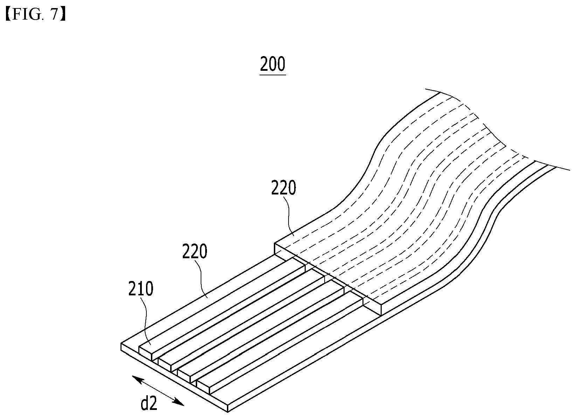

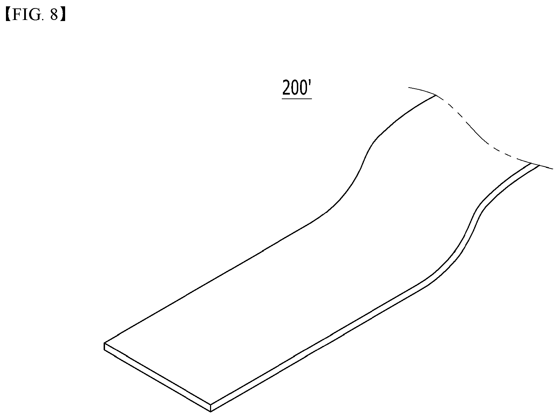

The terminal parts 200T of the conductive members can be joined to each other by welding or riveting. In addition, the terminal parts 200T are connected to the terminal busbar 22 of the above-mentioned battery module 1200, so that HV connection can be performed. This will be described again with reference to each embodiment of Figs. 7 and 8.

In Figs. 4 and 5, only both ends of the connection wire 100a are enlarged and shown for convenience of explanation, but the connection wire 100a has a wire shape extending long.

The insulating member 300 may include an electrical insulating material. For example, the insulating member 300 may include one or more materials selected from the group consisting of polypropylene (PP), polyethylene (PE), and polyvinyl chloride (PVC). In addition, the insulating member 300 may include a predetermined insulating adhesive layer. Here, the insulating adhesive layer may include one or more resins selected from the group consisting of an epoxy resin, an acrylic resin, a melamine resin, a polyamide resin, and a polyimide resin.

Meanwhile, the outside one end 300Eb of the insulating member 300 may be attached and fixed by a method such as an adhesive or taping so that the wound insulating member 300 does not unwind. Alternatively, it can be fixed by applying a band tie to the outside of the insulating member 300. Alternatively, an additional insulating coating can be formed to prevent the insulating member 300 from unwinding. However, this is an exemplary method, and the method is not particularly limited as long as it can fix the outside one end 300Eb of the insulating member 300.

Meanwhile, as shown in Fig. 4, a distance Gb between the conductive member 200b closest to the outside one end 300Eb of the insulating member 300 and the outside one end 300Eb of the insulating member 300 may be wider than a distance Ga between the conductive member 200a closest to the center side one end 300Ea of the insulating member 300 and the center side one end 300Ea of the insulating member 300. That is, in the connection wire 100a according to the present embodiment, the distance Gb between the conductive member 200b and the outside one end 300Eb of the insulating member 300 can be intentionally increased. The outermost region of the connection wire 100a may be configured such that the conductive member 200 is not interposed therein and only the insulating member 300 is additionally wound. Therefore, in the outermost region of the connection wire 100a, the insulating member 300 may be wound at least once or more to form the outer insulating portion 300U. In this manner, in the present embodiment, by forming a region in which the insulating member 300 is additionally wound on the outside of the connection wire 100a, an insulating coating can be easily provided on the connection wire 100a.

Next, embodiments of the conductive member will be described with reference to Figs. 7 and 8.

Fig. 7 is a partial perspective view showing a conductive member according to the present disclosure.

Referring to Fig. 7, the conductive member 200 according the invention is a flexible flat cable (FFC). That is, the conductive member 200 according to the invention is a cable in which one or more conductor circuit lines are wrapped with an insulator on the same plane and sewn together. Specifically, the conductive member 200 includes a conductor part 210 and an insulating film 220 surrounding the conductor part 210. The conductor part 210 includes an electrically conductive material. For example, the conductor part 210 may include one or more metal materials selected from the group consisting of gold, silver, copper, lead, and aluminum. Such a conductor part 210 may be provided by a plurality of numbers. The plurality of conductor parts 210 may be arranged while being spaced apart by a predetermined distance in the width direction d2 of the conductive member 200. The width direction d2 of the conductive member 200 may be a direction orthogonal to a direction in which the conductive member 200 extends.

The insulating film 220 is an electrically insulating material, and may include, for example, one or more materials selected from the group consisting of polypropylene (PP), polyethylene (PE), and polyvinyl chloride (PVC).

The conductive member 200 according to the present invention is a flexible flat cable, and in a state where the conductor parts 210 are arranged in parallel at predetermined intervals, the conductive member can be manufactured by placing insulating films 220 above and below the conductor parts 210 and then laminating the insulating films 220.

That is, the connection wire 100a according to the present embodiment may in the form of winding the insulating member 300 after the conductive members 200, which are flexible flat cables, are arranged on one surface of the insulating member 300.

Referring to Figs. 5 and 7 together, in a region corresponding to the terminal part 200T of the conductive member 200, a portion of the insulating film 220 may be removed to expose a portion of the conductor part 210. An exposed portion of the conductor part 210 may be connected to the terminal busbar described above.

Fig. 8 is a partial perspective view showing a conductive member according to an example not forming part of the current invention.

Referring to Fig. 8, the conductive member 200' according to another example may be an electrical conductor. That is, the conductive member 200' according to the example may include a metal material having electrical conductivity. For example, the conductive member 200' may be an electrical conductor including one or more metal materials selected from the group consisting of gold, silver, copper, lead, and aluminum. The connection wire 100a according to the example of the present disclosure may be in the form of winding the insulating member 300 after a conductive member 200', which is an electrical conductor, is arranged on one surface of the insulating member 300.

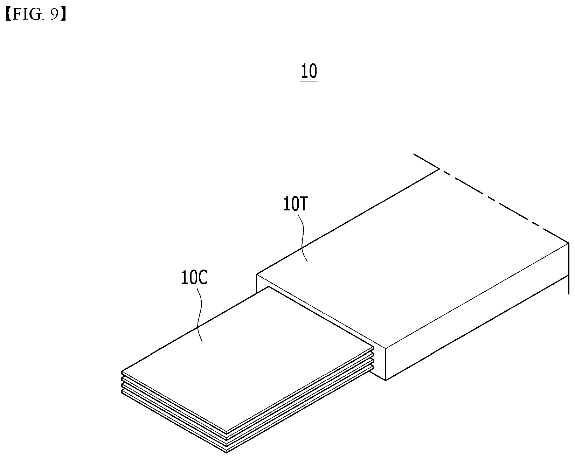

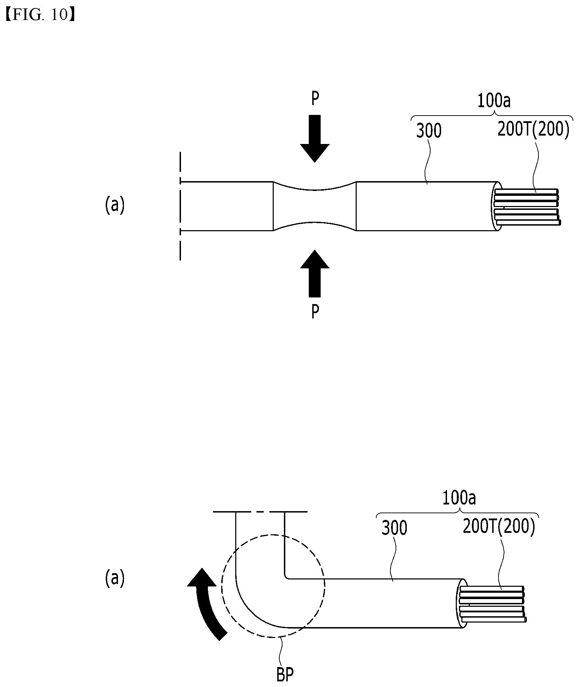

Next, advantages of the connection wire 100a according to the present embodiment will be described in comparison with the flexible busbar according to the comparative example of the present disclosure with reference to Figs. 9 and 10.

Fig. 9 is a partial perspective view showing a flexible busbar according to a comparative example of the present disclosure.

Referring to Fig. 9, conventionally, the flexible busbar 10 used for HV connection may include conductor parts 10C and an insulation tube part 10T surrounding these conductor parts 10C. Unlike the connection wire 100a according to the present embodiment, in a state in which the plurality of conductor parts 10C are simply stacked, the insulation tube part 10T is configured to cover the plurality of conductor parts 10C. Even if a material with flexibility is applied, there is bound to be restrictions in realizing bent portions. In recent battery packs where utilization of internal space is important, the conventional flexible busbar 10 has limitations in adapting to the available space inside the battery pack.

Meanwhile, Fig. 10 is a schematic diagram for explaining a process of forming a bent portion in a connection wire according to one embodiment of the present disclosure.

Referring to Fig. 6 and Figs. 10(a) and (b) together, since the connection wire 100a according to the present embodiment has a shape in which the insulating member 300 is wound with the conductive members 200 placed on the inner surface 300N, a pore is formed between the conductive members 200 or inside the insulating member 300.

Therefore, as shown in Fig. 10 (a), a portion of the connection wire 100a may be locally compressed by using the pore inside the connection wire 100a. Next, as shown in Fig. 10 (b), by bending the compressed portion of the connection wire 100a, the bent portion BP may be formed in the connection wire 100a. That is, the shape of the cross section of the connection wire 100a according to the present embodiment can be locally changed using the internal pore, so that the radius of curvature of the bent portion BP can be reduced. Compared with the conventional flexible busbar 10, the connection wire 100a can be strongly bent with a small radius of curvature, and thus, it is more suitable for application to a narrow space inside a battery pack.

Meanwhile, as shown in Fig. 6, the insulating member 300 can be wound so that the conductive members 200 do not overlap each other. In other words, each of the conductive members 200 is arranged so as to contact only the wound insulating member 300 and not to contact other conductive members 200. That is, a space can be secured between the conductive members 200, which can act as an advantage in terms of heat dissipation. Since the space between the conductive members 200 is advantageous for heat dissipation, it is possible to conduct electricity even if the cross-sectional area of the connection wire 100a is slightly reduced, which can be regarded as an advantageous factor for weight reduction and cost reduction.

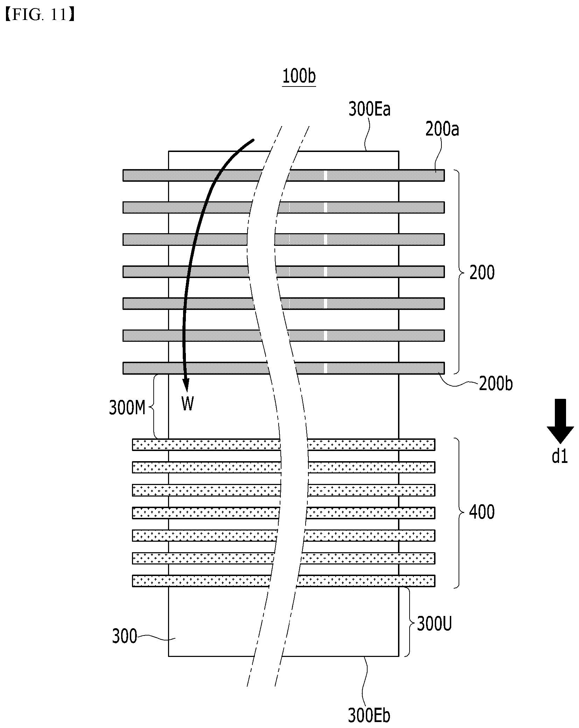

Next, a connection wire according to another embodiment of the present disclosure will be described in detail with reference to Figs. 11 to 13.

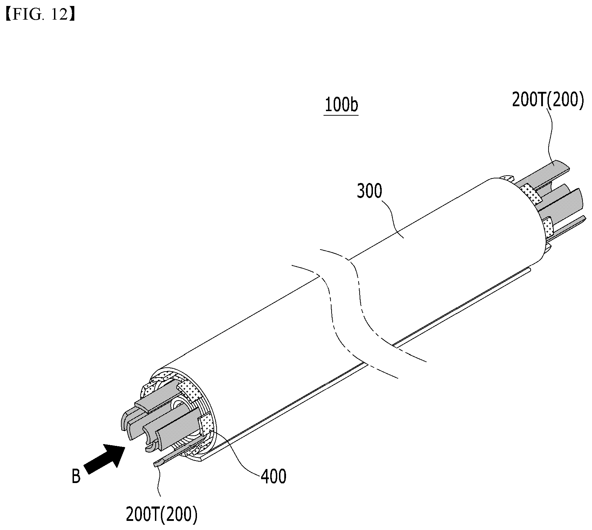

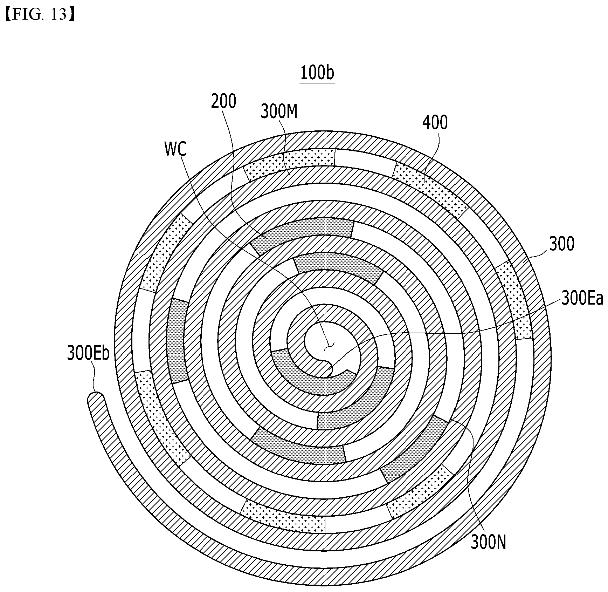

Fig. 11 is a schematic diagram for explaining a process of manufacturing a connection wire according to another embodiment of the present disclosure. Fig. 12 is a perspective view showing a connection wire according to another embodiment of the present disclosure. Fig. 13 is a plan view of the connection wire of Fig. 12 as viewed along a direction B.

Referring to Figs. 11 to 13, the connection wire 100b according to another embodiment of the present disclosure includes a plurality of conductive members 200 and an insulating member 300 surrounding the conductive members 200. In addition, the insulating member 300 has a wound shape, and the conductive members 200 are located on the inner surface 300N of the insulating member 300. This is the same as the connection wire 100a described above.

The connection wire 100b according to the present embodiment may further include a shielding circuit part 400, wherein the shielding circuit part 400 may be located on the inner surface 300N of the wound insulating member 300.

Specifically, as shown in Fig. 11, after not only the conductive member 200 but also the shielding circuit part 400 is arranged on one surface of the insulating member 300, the insulating member 300 may be wound(W) into a round form. Thereby, it is possible to manufacture the connection wire 100b shown in Figs. 12 and 13.

More specifically, the conductive members 200 are arranged closer to the center side one end 300Ea of the insulating member 300 than the shielding circuit parts 400, and the shielding circuit parts 400 may be arranged closer to the outside one end 300Eb of the insulating member 300 than the conductive members 200. That is, in the direction d1 from the center side one end 300Ea of the insulating member 300 to the outside one end 300Eb of the insulating member 300, the conductive member 200 can be sequentially arranged first, and then the shielding circuit parts 400 may be sequentially arranged. If the insulating member 300 is wound(W) in this state, on the basis of the wound shape of the insulating member 300, the shielding circuit part 400 may be located farther from the winding center WC than the conductive members 200 as shown in Figs. 12 and 13. That is, the shielding circuit parts 400 may be located outside the conductive members 200 in the cross section of the connection wire 100b.

As an example, the shielding circuit part 400 may include a metal layer. The shielding circuit part 400 may be a layered member including one or more metal materials selected from the group consisting of gold, silver, copper, lead, and aluminum. The shielding circuit part 400 is located outside the conductive member 200 and performs the function of preventing noise interference between the conductive member 200 functioning as a conducting circuit and the outside.

Meanwhile, referring to Fig. 11 again, the insulating member 300 may be wound with a predetermined distance between the shielding circuit parts 400 and the outside one end 300Eb of the insulating member 300. The portion of the insulation member 300 having the predetermined distance may be configured as an outer insulation part 300U at an outermost portion of the connection wire 100b.

In the case of the connection wire 100b according to the present embodiment, the shielding circuit part 400 together with the conductive member 200 is arranged on one surface of the insulating member 300, and then wound together, so that a shielding circuit part 400 can be provided on the connection wire 100b. That is, when winding the insulating member 300 without a separate additional process, it has an advantage that the shielding member can be easily provided by simply adding the shielding circuit part 400.

Further, referring to Figs. 11 and 12, the connection wire 100b according to the present embodiment may have a shape in which the insulating member 300 is wound in a state in which the shielding circuit part 400 is spaced apart from the conductive member 200 in the direction d1 from the center side one end 300Ea of the insulating member 300 to the outside one end 300Eb of the insulating member 300. That is, when the insulating member 300 is wound, the shielding circuit part 400 may be located so as to be spaced apart from the conductive member 200 by a predetermined distance.

The portion of the insulating member 300 corresponding to the distance between the conductive member 200 and the shielding circuit part 400 may be composed of an intermediate insulation part 300M that electrically insulates the conductive members 200 and the shielding circuit part 400.

When forming the shielding circuit part 400 for the shielding function, an insulating layer is essentially required between the conductive member 200 functioning as a conducting circuit and the shielding circuit part 400. Therefore, the connection wire 100b according to the present embodiment adjusts the distance between the conductive member 200 on the insulating member 300 and the shielding circuit part 400 before winding, and has the advantage of being able to easily provide an insulating layer between the conductive member 200 and the shielding circuit part 400.

Figs. 11 to 13 show forms in which a plurality of shielding circuit parts 400 are arranged at regular intervals, but a form in which a plate-shaped single shielding circuit part 400 is wound together with the insulating member 300 is also possible.

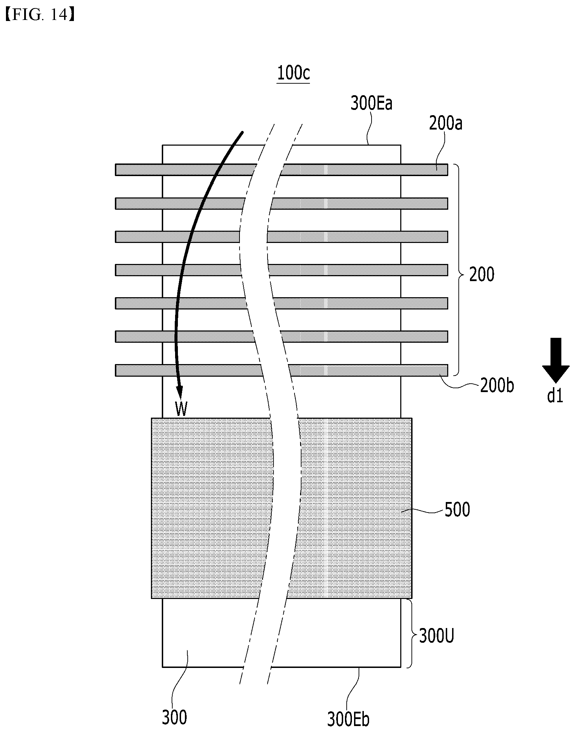

Next, a connection wire according to another embodiment of the present disclosure will be described in detail with reference to Figs. 14 to 16.

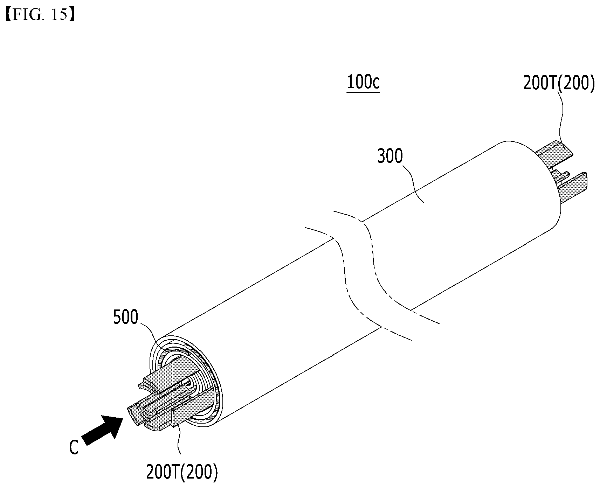

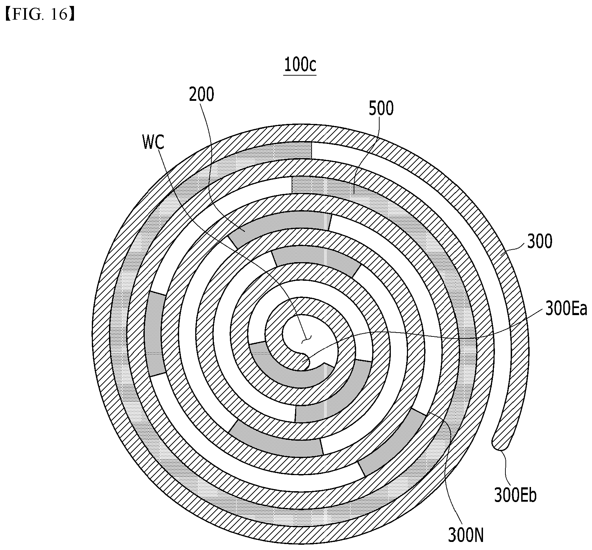

Fig 14 is a schematic diagram for explaining a process of manufacturing a connection wire according to another embodiment of the present disclosure. Fig. 15 is a perspective view showing a connection wire according to another embodiment of the present disclosure. Fig. 16 is a plan view of the connection wire of Fig. 15 as viewed along a direction C.

Referring to Figs. 14 to 16, the connection wire 100c according to the invention includes a plurality of conductive members 200 and an insulating member 300 surrounding the conductive members 200. In addition, the insulating member 300 has a wound shape, and the conductive members 200 are located on the inner surface 300N of the insulating member 300. This is the same as the connection wires 100a and 100b described above.

The connection wire 100c according to the present embodiment further includes a short circuit prevention sheet 500, wherein the short circuit prevention sheet 500 is located on the inner surface 300N of the wound insulating member 300.

Specifically, as shown in Fig. 14, after the conductive member 200 and the short circuit prevention sheet 500 are arranged on one surface of the insulating member 300, the insulating member 300 may be wound(W) into a round form. Thereby, it is possible to manufacture the connection wire 100c shown in Figs. 15 and 16.

More specifically, the conductive members 200 are arranged closer to the center side one end 300Ea of the insulating member 300 than the short circuit prevention sheet 500, and the short circuit prevention sheet 500 is arranged closer to the outside one end 300Eb of the insulating member 300 than the conductive members 200. That is, in the direction d1 from the center side one end 300Ea of the insulating member 300 to the outside one end 300Eb of the insulating member 300, the conductive members 200 is sequentially arranged first, and then the short circuit prevention sheet 500 is arranged. If the insulating member 300 is wound(W) in this state, on the basis of the wound shape of the insulating member 300, the short circuit prevention sheet 500 is located farther from the winding center WC than the conductive members 200 as shown in Figs. 15 and 16. That is, the short circuit prevention sheet 500 is located outside the conductive members 200 in the cross-section of the connection wire 100c.

The short circuit prevention sheet 500 includes a ceramic sheet. More specifically, the short circuit prevention sheet 500 may include a MICA sheet. That is, the short circuit prevention sheet may include a silicate-containing inorganic sheet.

When the battery pack according to the present embodiment is applied to a vehicle or the like, it is frequently exposed to direct sunlight and may be placed under high temperature conditions, for example, in summer or in a desert. In addition, since a number of battery modules are intensively arranged to increase the mileage of the vehicle, a thermal runaway phenomenon generated in one battery module is easily propagated to adjacent battery modules, which may eventually lead to ignition or explosion of the battery pack itself. One example of a thermal runaway phenomenon is as follows. Physical, thermal, and electrical damage to the battery cell 11, including overcharging, may occur, and the internal pressure of the battery cell 11 may increase. When the fusion strength limit value of the pouch-type cell case of the battery cell 11 is exceeded, high-temperature heat, venting gas, and the like generated from the battery cell 11 may be ejected to the outside of the battery cell 11 .

In the case of the connection wire 100c according to the invention the short circuit prevention sheet 500 together with the conductive member 200 is arranged on one surface of the insulating member 300, and then wound together, so that a layer for short-circuit prevention can be provided on the connection wire 100c. Even when the inside of the battery pack becomes a high-temperature environment due to a thermal runaway phenomenon or the like, the short circuit prevention sheet 500 including the ceramic sheet does not melt and can maintain its shape. Thereby, it is possible to prevent the conductor such as the internal conductive member 200 from contacting the external mechanism and causing a short circuit. In other words, in a high-temperature environment, additional hazardous situations can be prevented from occurring.

The connection wire 100c according to the invention has the advantage that a layer for preventing thermal diffusion can be easily provided by simply adding the short circuit prevention sheet 500 when the insulating member 300 is wound without a separate additional process. In the case of a conventional HV wire, it was difficult to apply a short circuit prevention sheet 500 such as a MICA sheet, whereas the connection wire 100c according to the present embodiment can easily add a short circuit prevention sheet 500, thereby being able to prevent short circuits in the event of thermal runaway and ensure excellent stability.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The battery pack according to the present embodiment described above can be applied to various devices. Specifically, it can be applied to vehicle means such as an electric bike, an electric vehicle, and a hybrid electric vehicle, or ESS (Energy Storage System), but is not limited thereto and can be applied to various devices capable of using a secondary battery.

### [Description of Reference Numerals]

1000: battery pack
100, 100a, 100b, 100c: connection wire
200: conductive member
300: insulation member
400: shielding circuit part
500: short circuit prevention sheet

## Claims

1. A connection wire (100) comprising:
a plurality of conductive members (200);
an insulating member (300) surrounding the conductive members (200),
wherein the insulating member (300) has a wound shape, the conductive members (200) being located on an inner surface of the insulating member (300), each of the conductive members (200) being arranged so as to contact only the wound insulating member (300) and not to contact other conductive members (200), a pore being formed between the conductive members (200), and in a state in which the conductive members (200) being sequentially arranged in the direction from a center side one end of the insulating member (300) to an outside one end of the insulating member (300),
**characterized in that**
the conductive member (200) is a flexible flat cable, and includes a conductor part (210) and an insulating film (220) surrounding the conductor part (210), and
the connection wire (100) further comprises a short circuit prevention sheet (500) being located on the inner surface of the wound insulating member (300) and located farther from the winding center than the conductive members (200) on the basis of the wound shape of the insulating member (300), wherein the short circuit prevention sheet (500) includes a ceramic sheet.

2. The connection wire (100) according to claim 1, wherein:
the conductive member (200) includes a terminal part that is exposed by extending longer in one direction than the insulating member (300).

3. The connection wire (100) according to claim 1, wherein:
a distance between the conductive member (200) closest to the outside one end of the insulating member (300) and the outside one end of the insulating member (300) is wider than a distance between the conductive member (200) closest to the center side one end of the insulating member (300) and the center side one end of the insulating member (300).

4. The connection wire (100) according to claim 1, wherein:
in the outermost region, the insulating member (300) is wound at least once or more to form an outer insulating part.

5. The connection wire (100) according to claim 1, wherein:
the conductive member (200) includes a conductor part and an insulating film surrounding the conductor part.

6. The connection wire (100) according to claim 1,
further comprising a shielding circuit part (400),
wherein the shielding circuit part (400) is located on the inner surface of the wound insulating member (300), and
based on the winding shape of the insulating member (300), the shielding circuit part (400) is located farther from the winding center than the conductive members (200).

7. The connection wire (100) according to claim 6, wherein:
the insulating member (300) has a wound shape, in a state in which the shielding circuit part (400) is spaced apart from the conductive member (200) in the direction from a center side one end of the insulating member (300) to an outside one end of the insulating member (300).

8. The connection wire (100) according to claim 6, wherein:
the shielding circuit part (400) includes a metal layer.

9. The connection wire (100) according to claim 1 wherein:
the short circuit prevention sheet (500) includes a MICA sheet.

10. A battery pack (1000) comprising:
the connection wire (100) of claim 1;
battery modules (1200); and
a BDU module (1300),
wherein the connection wire (100) electrically connects between the battery modules (1200) or between the battery module (1200) and the BDU module (1300).

## Patentansprüche

1. Verbindungsdraht (100) aufweisend:
mehrere leitfähige Elemente (200);
ein isolierendes Element (300), das die leitfähigen Elemente (200) umgibt,
wobei das isolierende Element (300) eine gewundene Form aufweist, wobei die leitfähigen Elemente (200) auf einer Innenfläche des isolierenden Elements (300) angeordnet sind, wobei jedes der leitfähigen Elemente (200) so angeordnet ist, dass es ausschließlich das gewundene isolierende Element (300) kontaktiert und andere leitfähige Elemente (200) nicht kontaktiert, wobei eine Pore zwischen den leitfähigen Elementen (200) ausgebildet ist, und in einem Zustand, in dem die leitfähigen Elemente (200) nacheinander in der Richtung von einem Ende des isolierenden Elements (300) auf der Mittelseite zu einem äußeren Ende des isolierenden Elements (300) angeordnet sind,
**dadurch gekennzeichnet, dass**
das leitfähige Element (200) ein flexibles Flachkabel ist und ein Leiterteil (210) und einen Isolierfilm (220) aufweist, der das Leiterteil (210) umgibt, und
der Verbindungsdraht (100) ferner eine Kurzschlussverhinderungsfolie (500) aufweist, die auf der Innenfläche des gewundenen isolierenden Elements (300) angeordnet ist und auf der Basis der gewundenen Form des isolierenden Elements (300) weiter von der Windungsmitte entfernt angeordnet ist als die leitfähigen Elemente (200), wobei die Kurzschlussverhinderungsfolie (500) eine Keramikfolie aufweist.

2. Verbindungsdraht (100) nach Anspruch 1, wobei:
das leitfähige Element (200) ein Anschlussteil aufweist, das freiliegt, indem es sich länger in eine Richtung erstreckt als das isolierende Element (300).

3. Verbindungsdraht (100) nach Anspruch 1, wobei:
ein Abstand zwischen dem leitfähigen Element (200), das dem einen äußeren Ende des isolierenden Elements (300) am nächsten ist, und dem einen äußeren Ende des isolierenden Elements (300) breiter ist als ein Abstand zwischen dem leitfähigen Element (200), das dem einen Ende der mittleren Seite des isolierenden Elements (300) am nächsten ist, und dem einen Ende der mittleren Seite des isolierenden Elements (300).

4. Verbindungsdraht (100) nach Anspruch 1, wobei:
in dem äußersten Bereich das isolierende Element (300) mindestens einmal oder mehrmals gewunden ist und dadurch ein äußeres isolierendes Teil bildet.

5. Verbindungsdraht (100) nach Anspruch 1, wobei:
das leitfähige Element (200) ein Leiterteil und einen Isolierfilm aufweist, der das Leiterteil umgibt.

6. Verbindungsdraht (100) nach Anspruch 1,
ferner aufweisend ein Abschirmschaltungsteil (400),
wobei das Abschirmschaltungsteil (400) auf der Innenfläche des gewundenen isolierenden Elements (300) angeordnet ist, und
das Abschirmschaltungsteil (400) auf der Basis der gewundenen Form des isolierenden Elements (300) weiter von der Windungsmitte entfernt angeordnet ist als die leitfähigen Elemente (200).

7. Verbindungsdraht (100) nach Anspruch 6, wobei:
das isolierende Element (300) eine gewundene Form aufweist, in einem Zustand, in dem das Abschirmschaltungsteil (400) von dem leitfähigen Element (200) in der Richtung von einem Ende des isolierenden Elements (300) auf der Mittelseite zu einem äußeren Ende des isolierenden Elements (300) beabstandet ist.

8. Verbindungsdraht (100) nach Anspruch 6, wobei:
das Abschirmschaltungsteil (400) eine Metallschicht aufweist.

9. Verbindungsdraht (100) nach Anspruch 1, wobei:
die Kurzschlussverhinderungsfolie (500) eine MICA-Folie aufweist.

10. Batteriepack (1000) aufweisend:
den Verbindungsdraht (100) nach Anspruch 1;
Batteriemodule (1200); und
ein BDU-Modul (1300),
wobei der Verbindungsdraht (100) eine elektrische Verbindung zwischen den Batteriemodulen (1200) oder zwischen dem Batteriemodul (1200) und dem BDU-Modul (1300) herstellt.

## Revendications

1. Fil de connexion (100) comprenant :
une pluralité d'éléments conducteurs (200);
un élément isolant (300) entourant les éléments conducteurs (200),
l'élément isolant (300) ayant une forme enroulée, les éléments conducteurs (200) étant situés sur une surface intérieure de l'élément isolant (300), chacun des éléments conducteurs (200) étant agencé de manière à n'être au contact qu'avec l'élément isolant enroulé (300) et de ne pas être au contact d'autres éléments conducteurs (200), un pore étant formé entre les éléments conducteurs (200), et dans un état où les éléments conducteurs (200) sont agencés en séquence dans la direction allant d'une extrémité côté central de l'élément isolant (300) à une extrémité extérieure de l'élément isolant (300),
**caractérisé en ce que**
l'élément conducteur (200) est un câble plat flexible comprenant une partie conductrice (210) et un film isolant (220) entourant la partie conductrice (210), et
le fil de connexion (100) comprenant en outre une feuille de prévention des courts-circuits (500) située sur la surface intérieure de l'élément isolant enroulé (300) plus loin du centre d'enroulement que les éléments conducteurs (200) en fonction de la forme enroulée de l'élément isolant (300), la feuille de prévention des courts-circuits (500) comprenant une feuille de céramique.

2. Fil de connexion (100) selon la revendication 1,
l'élément conducteur (200) comprenant une partie terminale exposée par une extension plus longue dans une direction que l'élément isolant (300).

3. Fil de connexion (100) selon la revendication 1,
une distance entre l'élément conducteur (200) le plus proche de l'extrémité extérieure de l'élément isolant (300) et l'extrémité extérieure de l'élément isolant (300) étant plus large qu'une distance entre l'élément conducteur (200) le plus proche de l'extrémité côté central de l'élément isolant (300) et d'une extrémité côté central de l'élément isolant (300).

4. Fil de connexion (100) selon la revendication 1,
dans la région extérieure, l'élément isolant (300) étant enroulé au moins une fois ou davantage pour former un élément isolant extérieur.

5. Fil de connexion (100) selon la revendication 1,
l'élément conducteur (200) comprenant un élément conducteur et un film isolant entourant l'élément conducteur.

6. Fil de connexion (100) selon la revendication 1,
comprenant également un élément de circuit de blindage (400),
l'élément de circuit de blindage (400) étant situé sur la surface intérieure de l'élément isolant enroulé (300), et
en fonction de la forme de l'enroulement de l'élément isolant (300), l'élément de circuit de blindage (400) étant situé plus loin du centre d'enroulement que les éléments conducteurs (200).

7. Fil de connexion (100) selon la revendication 6,
l'élément isolant (300) ayant une forme enroulée, dans un état où l'élément de circuit de blindage (400) est espacé de l'élément conducteur (200) dans la direction allant d'une extrémité côté central de l'élément isolant (300) à une extrémité extérieure de l'élément isolant (300).

8. Fil de connexion (100) selon la revendication 6,
l'élément du circuit de blindage (400) comprenant une couche métallique.

9. Fil de connexion (100) selon la revendication 1,
la feuille de prévention des courts-circuits (500) comprenant une feuille de mica.

10. Bloc-batterie (1000), comprenant :
le fil de connexion (100) selon la revendication 1;
des modules de batterie (1200) ; et
un module BDU (1300),
le fil de connexion (100) se connectant électriquement entre les modules de batterie (1200) ou entre le module batterie (1200) et le module BDU (1300).
